# EUROPÄISCHE PATENTSCHRIFT

(11) **EP 3 894 301 B1**
(45) Veröffentlichungstag und Bekanntmachung des Hinweises auf die Patenterteilung: **11.09.2024**
(21) Anmeldenummer: 19828986.0
(22) Anmeldetag: 10.12.2019
(51) Int. Cl.: B62D 1/184, B62D 1/19

(54) **LENKSÄULE FÜR EIN KRAFTFAHRZEUG UND EIN VERFAHREN ZUM MONTIEREN**
STEERING COLUMN FOR A MOTOR VEHICLE AND METHOD FOR ASSEMBLY
COLONNE DE DIRECTION POUR UN VÉHICULE À MOTEUR ET PROCÉDÉ DE MONTAGE

(30) Priorität: 12.12.2018 DE 102018131918
(43) Veröffentlichungstag der Anmeldung: 20.10.2021
(73) Patentinhaber: thyssenkrupp Presta AG, 9492 Eschen (LI); thyssenkrupp AG, 45143 Essen (DE)
(72) Erfinder: SCHMIDT, René Marco, 9464 Lienz (CH)
(74) Vertreter: thyssenkrupp Intellectual Property GmbH
(86) Internationale Anmeldenummer: PCT/EP2019/084389
(87) Internationale Veröffentlichungsnummer: WO 2020/120456

(56) Entgegenhaltungen:
- WO-A1-2016/146331
- DE-A1- 102016 210 833
- DE-A1- 102016 214 709
- DE-B3- 102014 108 577
- GB-A- 2 311 839
- US-A1- 2008 236 325

## Beschreibung

Die Erfindung betrifft eine Lenksäule für ein Kraftfahrzeug umfassend eine Stelleinheit, in der eine Lenkwelle drehbar gelagert ist, eine Halteeinheit, die mit der Karosserie des Kraftfahrzeugs verbindbar ist und die Stelleinheit trägt, wobei die Stelleinheit relativ zur Halteeinheit verstellbar ist, wenigstens ein Arretierelement, das mit der Halteeinheit zur axialen Arretierung der Stelleinheit beweglich gekoppelt ist, wenigstens ein Federelement, das eine Vorspannkraft auf das Arretierelement ausübt, wenigstens ein Sicherungselement zur Fixierung des Federelements. Weiterhin betrifft die Erfindung ein Verfahren zum Montieren. Eine Lenksäule gemäß dem Oberbegriff des Patentanspruchs 1 ist beispielsweise aus DE 10 2016 214 709 A1 bekannt.

Generell sind Lenksäulen für Kraftfahrzeuge bekannt, bei denen eine Lenkradposition an die Sitzposition des Fahrers eines Kraftfahrzeugs anpassbar ist. Die Lenksäule weist dazu eine Lenkspindel auf, an der ein Lenkrad befestigt ist. Die Lenksäule ist dabei im Wesentlichen derart verstellbar, dass das Lenkrad durch eine Längenverstellung in Längsrichtung der Lenksäule im Fahrzeuginnenraum positionierbar ist. Zur Fixierung der Lenkspindel mit dem Lenkrad an der gewünschten Position weist die Lenksäule eine Spanneinrichtung auf.

Eine Lenksäule mit einer Spanneinrichtung ist beispielsweise aus der eingangs genannten DE 10 2016 214 709 A1 bekannt. Die Lenksäule umfasst hierbei eine Manteleinheit und ein inneres Mantelrohr, in dem eine Lenkspindel drehbar gelagert ist. Das innere Mantelrohr ist in Richtung der Längsachse der Lenkspindel teleskopartig verstellbar und mittels einer lösbaren Spanneinrichtung in unterschiedlichen Lenkradpositionen feststellbar. Die Manteleinheit ist an der Karosserie des Kraftfahrzeugs gehaltert.

Die aus der DE 10 2016 214 709 A1 bekannte Spanneinrichtung weist ein Arretierelement auf, das mit einem Eingriffsteil formschlüssig verbindbar und in der Manteleinheit verschiebbar angeordnet ist. Das Eingriffsteil ist mit dem inneren Mantelrohr gekoppelt. Ferner weist die Spanneinrichtung einen Nocken und einen Spannbolzen auf, der in der Manteleinheit drehbar gelagert ist. Der Nocken ist dabei mit dem Spannbolzen derart verbunden, dass der Spannbolzen durch eine Rotationsbewegung mit dem Arretierelement zusammenwirkt. Das Arretierelement wird durch die Drehbewegung des Nockens angehoben bzw. abgesenkt. In der Freigabestellung sind das Arretierelement und das Eingriffselement voneinander entkoppelt. Zur Anhebung bzw. Absenkung des Arretierelements weist das Arretierelement eine Nockenbahn auf. Der Nocken wirkt dabei mit der Nockenbahn des Arretierelements zur Fixierung bzw. Lösung der Lenkspindel zusammen.

Zur Vorspannung des Arretierelements weist die Spanneinrichtung ein Federelement auf, das am Arretierelement angreift. Dabei ist das Federelement in einer Halterung derart angeordnet, dass das Federelement mit einem freien Ende mit der Halterung fest verbunden ist.

Nachteilig an der aus der DE 10 2016 214 709 A1 vorbekannten Spanneinrichtung ist, dass die Verbindung des Federelements mit der Halterung aufwendig ist, da ein Gewinde in die Halterung geschnitten und das Federelement mit der Halterung verschraubt wird. Dies stellt einen erhöhten Fertigungs- und Montageaufwand dar. Dasselbe gilt für die aus der US 2008/0236325 A1 bekannte Spanneinrichtung.

Der Erfindung liegt die Aufgabe zu Grunde, eine Lenksäule mit einer verbesserten Spanneinrichtung anzugeben, die einfach und kostengünstig aufgebaut sowie leicht zu montieren ist.

Erfindungsgemäß wird diese Aufgabe im Hinblick auf die Lenksäule durch den Gegenstand des Patentanspruchs 1 gelöst.

Konkret wird die Aufgabe durch eine Lenksäule für ein Kraftfahrzeug gelöst, die eine Stelleinheit umfasst, in der eine Lenkwelle drehbar gelagert ist. Die Lenksäule umfasst eine Halteeinheit, die mit der Karosserie des Kraftfahrzeuges verbindbar ist und die Stelleinheit trägt, wobei die Stelleinheit relativ zur Halteeinheit verstellbar ist. Die Lenksäule weist wenigstens ein Arretierelement auf, das mit der Halteeinheit zur axialen Arretierung der Stelleinheit beweglich gekoppelt ist, sowie wenigstens ein Federelement, das eine Vorspannkraft auf das Arretierelement ausübt. Ferner umfasst die Lenksäule wenigstens ein Sicherungselement zur Fixierung des Federelements, wobei das Arretierelement, das Sicherungselement und ein Gegenlager eine Dreipunktanordnung bilden, in der das Federelement positioniert und fixiert ist. Dabei stützt sich das Federelement einerseits am Arretierelement und andererseits am Gegenlager ab. Zwischen dem Arretierelement und dem Gegenlager ist ein Sicherungselement angeordnet, das das Federelement vorspannt.

Die Erfindung hat den Vorteil, dass es sich hierbei um ein selbstsicherndes System handelt, bei dem das Sicherungselement eine Doppelfunktion erfüllt. Sowohl das Vorspannen als auch das Sichern bzw. Fixieren des Federelements erfolgen durch das Sicherungselement. Somit ist kein zusätzlicher Schraub- bzw. Nietvorgang zum Vorspannen bzw. Fixieren des Federelements erforderlich.

Das Gegenlager bildet dabei einen ersten Punkt, insbesondere ersten Lagerpunkt oder ersten Haltepunkt der Dreipunktanordnung. Das Arretierelement bildet einen zweiten Punkt, insbesondere zweiten Lagerpunkt oder zweiten Haltepunkt der Dreipunktanordnung. Das Sicherungselement bildet einen dritten Punkt, insbesondere dritten Lagerpunkt oder dritten Haltepunkt der Dreipunktanordnung.

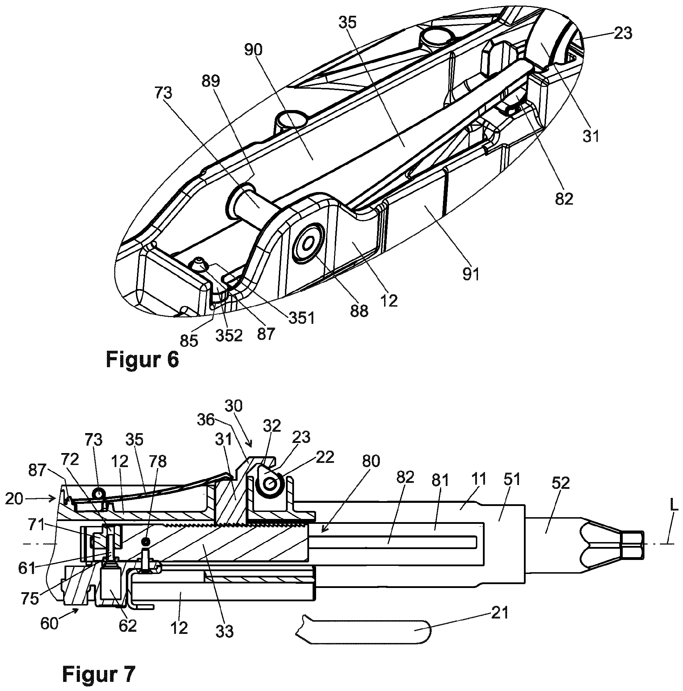

Das Sicherungselement bzw. allgemein der dritte Punkt der Dreipunktanordnung ist zwischen dem Arretierelement und dem Gegenlager, also zwischen dem zweiten und ersten Punkt der Dreipunktanordnung angeordnet. Das Arretierelement und das Gegenlager, also der zweite und erste Punkt der Dreipunktanordnung bilden eine Linie. Das Sicherungselement bzw. allgemein der dritte Punkt der Dreipunktanordnung ist auf einer Senkrechten angeordnet, die diese Linie schneidet und zwar zwischen dem Arretierelement und dem Gegenlager, also zwischen dem zweiten und ersten Punkt der Dreipunktanordnung. Konkret liegt zumindest die Berührungslinie des Sicherungselements mit dem Federelement außerhalb der Linie zwischen dem Arretierelement und dem Gegenlager, also zwischen dem zweiten und ersten Punkt der Dreipunktanordnung. In Fig. 7 ist die Berührungslinie des Sicherungselements mit dem Federelement unterhalb der Linie zwischen dem Arretierelement und dem Gegenlager angeordnet, eine andere Anordnung je nach Einbaulage des Federelements ist möglich. Dadurch wird erreicht, dass bspw. im Fall eines geraden Federelements dieses zur Erzeugung der Vorspannkraft ausgelenkt wird.

Das Sicherungselement bzw. allgemein der dritte Punkt der Dreipunktanordnung kann auch direkt auf der Linie angeordnet sein, bspw. wenn das Federelement in der Ruhelage gekrümmt ist.

Außerdem sind vorzugsweise das Gegenlager, insbesondere das Gegenlager und das Arretierelement einerseits und das Sicherungselement andererseits im montierten Zustand auf entgegengesetzten Seiten des Federelements angeordnet. Mit anderen Worten ist das Federelement zwischen dem Sicherungselement einerseits und dem Gegenlager und dem Arretierelement andererseits angeordnet, insbesondere eingespannt.

Durch die vorstehend beschriebe Lage der drei Punkte wird bewirkt, dass das Federelement so in die Dreipunktanordnung eingespannt werden kann bzw. eingespannt ist, dass auf das Arretierelement eine Vorspannkraft wirkt, die das Arretierelement in die Arretierstellung zwingt. Die Dreipunktanordnung und das Federelement wirken so zusammen, dass das Federelement im eingespannten Zustand aus der Ruhelage ausgelenkt und im ausgelenkten Zustand fixiert ist. Das Federelement ist im ausgelenkten Zustand elastisch verformt.

Das Federelement kann im Ruhezustand beispielsweise gerade ausgebildet sein. Die Dreipunktanordnung bedingt dann eine Biegelinie des Federelements, entlang der sich das Federelement im eingespannten Zustand verformt. Im verformten Zustand kann das Federelement kontinuierlich gekrümmt sein. Die Lage der drei Punkte, Arretierelement, Gegenlager und Sicherungselement, relativ zueinander bestimmt die Biegelinie des Federelements und somit die Federkraft, die auf das Arretierelement wirkt.

Es ist auch möglich, dass das Federelement im Ruhezustand gekrümmt und im eingespannten Zustand in der Dreipunktanordnung zumindest teilweise gestreckt wird. Auch hier wirken die Dreipunktanordnung und das Federelement so zusammen, dass das Arretierelement mit einer Vorspannkraft beaufschlagt wird.

Generell kann das Federelement als Blattfeder, also als flache, blattförmige Feder ausgebildet sein. Das Federelement kann beispielsweise durch eine Federzunge gebildet sein, die sich an einem Ende verjüngt. Die Federzunge hat insbesondere eine trapezförmige Form, wobei die Basis am Gegenlager und die parallel gegenüber angeordnete Seite bzw. das parallel gegenüber angeordnete Ende der Federzunge am Arretierelement anliegen. Die Basis und die parallel gegenüber angeordnete Seite bilden die Grundseiten der trapezförmigen Federzunge. Die Basis ist länger als die parallel gegenüber angeordnete Seite bzw. das Ende.

Andere Formen des Federelements sind möglich.

Zur Montage kann das Federelement mit Hilfe eines Montagewerkzeuges ausgelenkt und in der Dreipunktanordnung positioniert werden, bspw. durch Einschieben. Es ist auch möglich, das Federelement auf dem Arretierelement und dem Gegenlager zu positionieren und auszulenken, so dass das Sicherungselement in die Halteeinheit eingefügt werden kann, um das Federelement in dem vorgespannten Zustand zu sichern und zu fixieren.

Die Justierung der erforderlichen Vorspannkraft auf das Arretierelement erfolgt dabei durch die Beabstandung zwischen dem Arretierelement und dem Federelement sowie zwischen dem Sicherungselement und dem Federelement.

Durch das Federelement wird das Arretierelement im montierten Zustand gegen das Eingriffselement vorgespannt. Das Federelement bewirkt somit eine Vorspannung des Arretierelements in Richtung des Eingriffselements. Dadurch wird ein sicheres Eingreifen des Arretierelements in das Eingriffselement ermöglicht. Mit anderen Worten ist durch das Federelement das Arretierelement in die Fixierstellung bzw. Arretierstellung überführbar. Das Federelement spannt das Arretierelement derart vor, dass ein sicheres Schließen des Spannhebels und somit ein sicheres Überführen des Arretierelements in die Fixierstellung erreicht wird.

Bevorzugte Ausführungsformen der Erfindung sind in den Unteransprüchen angegeben.

In einer bevorzugten Ausführungsform, weist die Lenksäule wenigstens eine Spannwelle auf, die drehfest mit einem Nocken verbunden ist, der das Arretierelement zum Lösen oder Arretieren der Stelleinheit betätigt. Dabei kann die Spannwelle mit einem Hebel und einer Klemmvorrichtung gekoppelt sein, wobei die Klemmvorrichtung zwischen einer Freigabestellung und einer Fixierstellung positioniert ist. Die Kopplung hat den Vorteil, dass die Klemmvorrichtung beispielsweise als kompakte Nocken- oder Kippstift-Klemmvorrichtung ausgeführt sein kann.

Das Sicherungselement kann in einer bevorzugten Ausführungsform als stiftartiges Bauteil ausgebildet sein, das mit der Halteeinheit fest verbunden ist. Diese Verbindungsform bringt den Vorteil mit sich, dass sie einfacher und kostengünstiger gegenüber der Fixierung mittels einer Schraube ist. Beispielsweise können Zylinderstifte mit rundem, kreiszylindrischem oder beliebigem Querschnitt verwendet werden. Ferner kann das Sicherungselement auch als Splint, als Stift mit zwei Passabschnitten oder als Passkerbstift gem. ISO 8745 ausgebildet sein.

In einer vorteilhaften Weiterbildung kann die feste Verbindung des Sicherungselements in der Halteeinheit dadurch realisiert sein, dass das Federelement das Sicherungselement derart mit einer Kraft in radialer Richtung, also in einer Richtung orthogonal zur Längserstreckungsachse des Sicherungselements, beaufschlagt, dass dieses kraftschlüssig an der Halteeinheit gehalten ist. Mit anderen Worten ist das Sicherungselement durch die Vorspannkraft des Federelements in der Halteeinheit gegen ein Herausfallen in Richtung der Längserstreckungsachse gehalten.

Alternativ oder zusätzlich kann das Sicherungselement in eine Öffnung der Halteeinheit eingepresst sein. In einem solchen Fall kann eine Übermaßpassung zwischen dem Sicherungselement und der Öffnung vorgesehen sein.

In einer weiteren bevorzugten Ausführungsform ist das Sicherungselement in eine Richtung in die Halteeinheit eingefügt, die winklig, insbesondere orthogonal zur Längsachse des Federelements in die Halteeinheit eingefügt ist. Als Auslenkrichtung wird dabei die Richtung bezeichnet, die orthogonal zur Längslage des Federelements und in die Halteeinheit hinein gerichtet ist. Diese Art der Anordnung des Sicherungselements hat den Vorteil, dass eine sehr gute Kraftübertragung auf das Federelement ermöglicht wird.

Um Doppelpassungen zu vermeiden, weist die Halteeinheit vorzugsweise eine erste und eine zweite Öffnung auf, wobei die Durchmesser der beiden Öffnungen entsprechend an den Durchmesser des Sicherungselements angepasst sind, wobei eine der beiden Öffnungen einen kleineren Durchmesser aufweist.

Vorzugsweise wird das Sicherungselement in eine der beiden Öffnungen der Halteinheit eingepresst. Dies ermöglicht eine kostengünstige und schnelle Montage.

In einer bevorzugten Ausführungsform, weist das Federelement einen Vorsprung auf, der in eine seitliche Aussparung der Halteeinheit eingreift. Dadurch wird vermieden, dass das Federelement bei der Montage falsch herum eingesetzt wird.

Zur exakten Positionierung des Federelements weist das Gegenlager in einer weiteren bevorzugten Ausführungsform ein Positionierelement auf, das in eine korrespondierende Struktur des Federelements eingreift.

In einer bevorzugten Ausführungsform weist das Sicherungselement eine Rändelung, insbesondere eine Längsrändelung mit einer Vielzahl von Zähnen auf. Somit sind geringere Einpresskräfte bei der Montage erforderlich. Des Weiteren bietet die Rändelung eine erhöhte Sicherheit gegen Verdrehen.

Ein nebengeordneter Aspekt der Erfindung betrifft ein Verfahren zum Montieren eines Federelements in eine Lenksäule nach dem Oberbegriff des Patentanspruchs 1, bei dem das Federelement innerhalb einer Dreipunktanordnung positioniert wird und mit einer Montagekraft vorgespannt wird, wobei das Sicherungselement anschließend fest mit der Halteeinheit verbunden wird, um das Federelement im vorgespannten Zustand zu fixieren. Zu den Vorteilen des erfindungsgemäßen Verfahrens wird auf die Ausführungen zu Patentanspruch 1 verwiesen.

Die feste Verbindung des Sicherungselements in der Halteeinheit kann dadurch realisiert werden, dass das Federelement das Sicherungselement derart mit einer Kraft in radialer Richtung, also in einer Richtung orthogonal zur Längserstreckungsachse des Sicherungselements, beaufschlagt, dass dieses kraftschlüssig an der Halteeinheit gehalten ist.

Alternativ oder zusätzlich kann das Sicherungselement in eine Öffnung der Halteeinheit eingepresst werden. In einem solchen Fall kann eine Übermaßpassung zwischen dem Sicherungselement und der Öffnung vorgesehen sein. Die Erfindung wird nachstehend mit weiteren Einzelheiten unter Bezug auf die beigefügten Zeichnungen näher erläutert.

In diesen zeigen
- Figur 1: eine perspektivische Ansicht einer Lenksäule mit einem Halteelement zur generellen Beschreibung des Aufbaus der Lenksäule als Hintergrundinformation;
- Figur 2: eine perspektivische Ansicht der Lenksäule gemäß Figur 1 ohne das Halteelement;
- Figur 3: eine perspektivische Ansicht einer Stelleinheit, einer Spanneinrichtung und einer Feststelleinrichtung der Lenksäule gemäß Figur 1;
- Figur 4: eine perspektivische Explosionsansicht der Stelleinheit und einer Energieabsorptionseinrichtung der Lenksäule gemäß Figur 1;
- Figur 5: eine perspektivische Ansicht der Lenksäule zusammengebauten Zustand nach einem erfindungsgemäßen Ausführungsbeispiel;
- Figur 6: eine Detailansicht der Spanneinrichtung gemäß Figur 5;
- Figur 7: eine Seitenansicht der Lenksäule gemäß Figur 5 mit der Spanneinrichtung und der Feststelleinrichtung in einer Fixierstellung des Arretierelements;
- Figur 8: eine perspektivische Ansicht des Sicherungselements als Stift mit zwei Passabschnitten;
- Figur 9: eine perspektivische Ansicht des Sicherungselements als Bolzen;
- Figur 10: eine perspektivische Ansicht des Sicherungselements als Splint;
- Figur 11: eine perspektivische Ansicht des Sicherungselements als Passkerbstift;
- Figur 12: eine perspektivische Ansicht des Sicherungselements als Stift mit einer Längsrändelung und
- Figur 13: eine perspektivische Ansicht des Sicherungselements vor dem Einpressen die beiden Öffnungen der Halteeinheit.

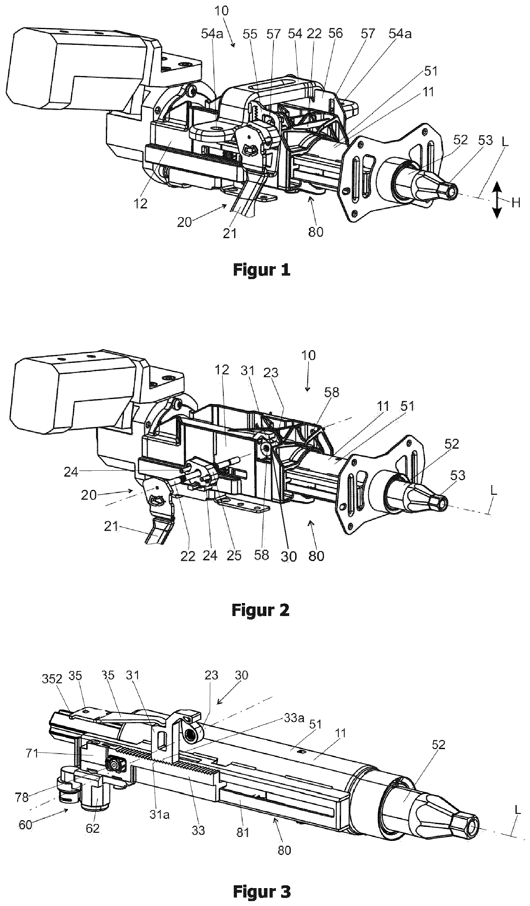

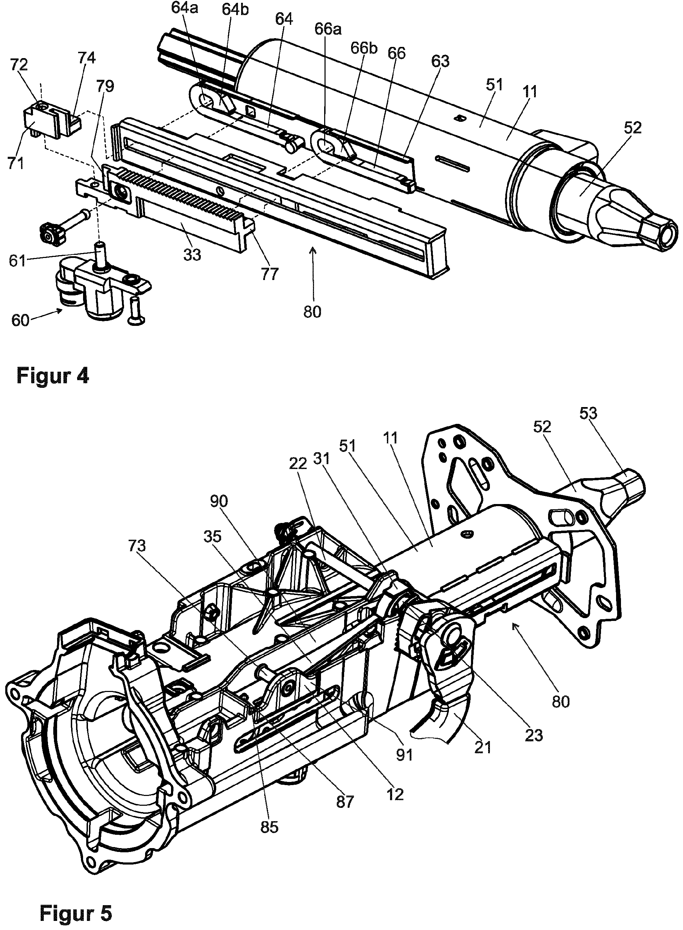

Figur 1 zeigt eine perspektivische Ansicht einer Lenksäule 10 zur Erläuterung der Einbausituation der relevanten Bauteile. Die allgemeine Einbausituation wird auch im Zusammenhang mit dem erfindungsgemäßen Ausführungsbeispiel gemäß Fig. 5-13 offenbart. Die Lenksäule 10 umfasst eine Stelleinheit 11, eine Halteeinheit 12 und eine Spanneinrichtung 20. Die Lenksäule 10 ist durch die Halteeinheit 12 an einer Karosserie eines nicht dargestellten Kraftfahrzeugs befestigbar. Die Halteeinheit 12 weist ein Halteelement 54 in Form einer Konsole auf, durch die die Lenksäule 10 mit der Karosserie des Kraftfahrzeugs verbindbar ist. Das Halteelement 54 umfasst zur Verbindung mit der Karosserie Befestigungsmittel 54a. Das Halteelement 54 weist des Weiteren Seitenwangen 55, 56 auf, die zueinander beabstandet sind. Die Seitenwangen 55, 56 sind dabei derart zueinander angeordnet, dass die Halteeinheit 12 zwischen den Seitenwangen 55, 56 aufgenommen ist. Die Stelleinheit 11 ist in der Halteeinheit 12 angeordnet.

Die Stelleinheit 11 umfasst eine Lenkspindel 52 und ein Mantelrohr 51. Die Lenkspindel 52 und das Mantelrohr 51 weisen eine gemeinsame Längsachse L auf. Die Lenkspindel 52 ist dabei im Mantelrohr 51 um die Längsachse L drehbar gelagert angeordnet. Die Lenkspindel 52 weist ein hinteres Ende 53 auf, an dem ein nicht dargestelltes Lenkrad auf der Lenkspindel 52 anbringbar ist. Das Mantelrohr 51 ist in einer Aufnahme der Halteeinheit 12 gehaltert.

Wie in Figur 2 gezeigt, weist die Spanneinrichtung 20 einen Spannhebel 21, eine Spannwelle 22 und einen Nocken 23 auf. Der Spannhebel 21 ist mit der Spannwelle 22 drehfest verbunden. Die Spannwelle 22 ist quer zur Längsachse L durch Langlöcher 57 in den einander gegenüberliegenden Seitenwangen 55, 56 und durch eine Durchgangsöffnung der Halteeinheit 12 hindurchgeführt. Die Spanneinrichtung 20 umfasst hierbei eine im Allgemeinen bekannte Spannmechanik mit einer Kippstiftanordnung 24 und einer Stützscheibe 25.

Die Kippstiftanordnung 24 ist mit der Spannwelle 22 drehfest verbunden. Ferner ist die Stützscheibe 25 der Kippstiftanordnung 24 gegenüberliegend drehfest mit der Seitenwange 55 verbunden. Durch eine Drehung des Spannhebels 21 und der damit verbundenen Spannwelle 22 wird die Stützscheibe 25 relativ zu dem Spannhebel 21 und der Spannwelle 22 axial verlagert. Die Stützscheibe 25 wird dadurch von außen gegen die Seitenwange 55 angepresst. Die Spannwelle 22 ist an der gegenüber angeordneten Seitenwange 56 axial verschiebefest gelagert, beispielsweise durch eine als Widerlager wirkende Sechskantmutter, die ein Innengewinde aufweist und auf ein Außengewinde der Spannwelle 22 aufgeschraubt ist. Werden daher die beiden Seitenwangen 55, 56 gegeneinander bewegt, wird die dazwischen angeordnete Halteeinheit 12 kraftschlüssig festgeklemmt. Anstelle der gezeigte Kippstiftanordnung 24, 25 können auch andere Mechanismen zur Umsetzung der Drehbewegung in eine Klemmbewegung zum Einsatz kommen, wie beispielsweise ein Keilscheibe-Nockenscheibe-Klemmvorrichtung.

Gemäß Figur 3 ist eine perspektivische Ansicht einer Stelleinheit 11, wie vorstehend beschrieben gezeigt. Ferner zeigt Figur 3 eine Feststelleinrichtung 30, eine Koppelvorrichtung 60 und eine Energieabsorptionseinrichtung 80.

Die Feststelleinrichtung 30 weist ein Arretierelement 31 und ein Eingriffselement 33 auf. Das Arretierelement 31 ist in Richtung der Längsachse L in der Halteeinheit 12 verschiebefest gelagert. In der Höhenrichtung H ist das Arretierelement 31 zur Einstellung der Feststellposition oder der Freigabeposition des Spannhebels 21 höhenverstellbar gelagert. Mit anderen Worten ist das Arretierelement 31 in der Halteeinheit 12 derart angeordnet, dass das Arretierelement 31 in der Halteeinheit 12 in der Höhenrichtung H verschiebbar ist. Das Eingriffselement 33 ist über eine Energieabsorptionseinrichtung 80 mit dem Mantelrohr 51 verbunden. Das Arretierelement 31 und das Eingriffselement 33 weisen Formschlussmittel 31a, 33a auf. Die Formschlussmittel 31a, 33a sind durch eine Hubbewegung des Arretierelements 31 formschlüssig in Eingriff bringbar.

In Figur 4 weist das Eingriffselement 33 ein Verbindungsteil 71 auf. Das Verbindungsteil 71 bildet ein separates Teil, das durch eine Koppelvorrichtung 60 mit dem Eingriffselement 33 verbunden ist. Hierzu greift ein Bolzen 61 der Koppelvorrichtung 60 in eine Bohrung 72 des Verbindungsteils 71 ein. Die Koppelvorrichtung 60 ist mit dem Eingriffselement 33 fest verbunden. Die Betätigung der Koppelvorrichtung 60 ermöglicht ein Lösen der mechanischen Verbindung zwischen dem Eingriffselement 33 und dem Verbindungsteil 71, in dem ein Bolzen 61 der Koppelvorrichtung 60 mittels einer pyrotechnischen Treibladung von einer ausgefahrenen Position in eine zurückgezogene Position überführt wird. Dabei ist das Verbindungsteil 71 vom Eingriffselement 33 getrennt, wobei das Verbindungsteil 71 und das Eingriffselement 33 in Längsrichtung L unabhängig voneinander bewegbar sind. Wie in Figur 4 gezeigt, sind Energieabsorptionselemente 64, 66 im Innenprofil 63 beabstandet zueinander angeordnet. Die Energieabsorptionselemente 64, 66 sind hierbei jeweils als U-förmiger Biegedraht, insbesondere Biegestreifen ausgestaltet. Das jeweilige Energieabsorptionselement 64, 66 ist mit einem ersten Schenkel über eine Umbiegung von 180° mit einem zweiten Schenkel verbunden. Am Ende des zweiten Schenkels ist jeweils ein Mitnehmerhaken 64b, 66b durch eine Umbiegung gegen den ersten Schenkel ausgebildet. Die Energieabsorptionselemente 64, 66 können als Stanzteile ausgebildet sein. Das Verbindungsteil 71 weist einen Zapfen 74 auf, der mit dem Mitnehmerhaken 64b in Wirkeingriff steht und in die durch die Umbiegung und den Mitnehmerhaken 64b gebildete ösenförmige Ausnehmung 64a eingreift. Das Eingriffselement 33 weist einen Zapfen 77 auf, der mit dem Mitnehmerhaken 66b in Wirkeingriff steht und in die durch die Umbiegung und den Mitnehmerhaken 66b gebildete ösenförmige Ausnehmung 66a eingreift.

In einem ersten Crashfall, in dem das Eingriffselement 33 mit dem Verbindungselement 71 gekoppelt ist, werden beide Energieabsorptionselemente 64, 66 gleichzeitig deformiert zur Bereitstellung eines hohen Crashniveaus. In einem zweiten Crashfall, in dem das Eingriffselement 33 von dem Verbindungselement 71 entkoppelt ist, wird nur das Energieabsorptionselement 66 deformiert und das Energieabsorptionselement 64 bleibt undeformiert zur Bereitstellung eines niedrigen Crashniveaus.

Figur 5 zeigt eine perspektivische Ansicht der Lenksäule 10 im zusammengebauten Zustand nach einem erfindungsgemäßen Ausführungsbeispiel. Die im Zusammenhang mit den Figuren 1-4 erläuterten Bauteilen sind bei der Lenksäule 10 gemäß Figur 5 ebenfalls verbaut. Hierzu wird auf die obigen Ausführungen verwiesen.

In Figur 6 ist eine Detailansicht der Spanneinrichtung 20 gemäß Figur 5 abgebildet. Zur Vorspannung des Arretierelements 31 weist die Halteeinheit 12 ein Federelement 35 auf, das das Arretierelement 31 gegen das Eingriffselement 33 presst.

Das Federelement 35 ist als Blattfeder, insbesondere als Federzunge mit einer länglichen Bauform ausgebildet. Zu den Einzelheiten der Federzunge wird auf die Beschreibungseinleitung verwiesen. Das der Basis gegenüberangeordnete Ende der Federzunge bzw. des Federelements 35 greift am Arretierelement 31, insbesondere an einem nachstehend näher beschriebenen Stützabschnitt 82 an. Dazu weist das Ende einen abgekanteten Abschnitt auf, der linienförmig am Stützabschnitt 82 bzw. allgemein am Arretierelement 31 anliegt.

Das Federelement 35 weist im Bereich der Basis, d.h. nahe am Gegenlager 85 einen Vorsprung auf, der in eine seitliche Aussparung der Halteeinheit 12 eingreift, um eine Falschmontage zu vermeiden.

Das Federelement 35 kann aus Federstahl oder einem anderem Material gebildet sein.

Im eingespannten Zustand ist das Federelement 35 gekrümmt.

Das Federelement 35 ist in einer Dreipunktanordnung angeordnet, die aus dem Arretierelement 31, einem Sicherungselement 73 und einem Gegenlager 85 gebildet ist. Das Federelement 35 stützt sich einerseits an dem Stützabschnitt 82, der Teil des Arretierelements 31 ist, und andererseits an dem Gegenlager 85 ab. Der Stützabschnitt 82 bildet einen ersten Absatz mit einer geraden Auflagefläche für das eine Ende des Federelements 35. Der erste Absatz ist auf der dem Eingriffselement 33 gegenüber angeordneten Seite des Arretierelements 31 ausgebildet. Das Gegenlager 85 bildet einen zweiten Absatz oder eine Schulter, in die die Basis, d.h. das andere Ende des Federelements 35 eingepasst ist. Mit anderen Worten lagert das Gegenlager 85 das Federelement in axialer Richtung, d.h. in einer Richtung entlang der Längsachse des Federelements 35, um ein Verschieben des Federelements 35 zu vermeiden. Zudem lagert das Gegenlager 85 das Federelement 35 in Querrichtung, d.h. in einer Richtung quer zur Längsachse des Federelements 35, um die Vorspannkraft in die Halteeinheit 12 einzuleiten.

Das Sicherungselement 73 ist auf der Seite des Federelements 35 entgegengesetzt zum Gegenlager 85 und dem Arretierelement 31 angeordnet und biegt das Federelement 35 durch.

Die Dreipunktanordnung kann als eine Lagerung des Federelements 35 an drei Positionen betrachtet werden, die eine kontinuierliche Durchbiegung des Federelements 35 ermöglicht (Figur 7).

Das Halteelement 12 umfasst zwei parallel angeordnete Seitenwände 90 und 91, wobei die Seitenwand 91 einen Vorsprung 92 aufweist. Die Seitenwände 90 und 91 weisen zwei Öffnungen 88, 89 auf. Zwischen dem Arretierelement 31 und dem Gegenlager 85 ist das Sicherungselement 73 in die beiden Seitenwände 90 und 91 derart angeordnet, dass sich das Sicherungselement 73 dabei oberhalb des Federelements 35 befindet und das Federelement 73 vorspannt bzw. fixiert. Das Sicherungselement 73 ist dabei winklig, insbesondere orthogonal zur Längsachse des Federelements 35 in die beiden Öffnungen 88, 89 eingefügt. Die orthogonale Anordnung des Sicherungselements 73 ermöglicht eine gute Kraftübertragung und einfache Montage.

Ein kegelförmiges Positionierelement 87 greift in eine korrespondierende Struktur des Federelements 35 ein, um das Federelement 35 exakt innerhalb der Dreipunktanordnung zu positionieren. Das Positionierelement 87 befindet sich im Bereich des Gegenlagers 85 und ragt durch eine Öffnung 351 des Federelements 35 hindurch.

Das Federelement 35 weist einen Vorsprung 352 auf, welche in eine Ausnehmung der Halteeinheit 12 eingreift, wobei der Vorsprung am Federelement 35 derart unsymmetrisch angeordnet ist, dass das Federelement 35 lediglich in einer einzigen Position an der Halteeinheit 12 montierbar ist. Somit kann auf einfache Art und Weise ein Fehlverbau verhindert werden.

Gemäß Figur 7 stehen das Arretierelement 31 und das Eingriffselement 33 formschlüssig in Eingriff. Die Fixierstellung der Arretierelements 31 entspricht dabei der Feststellposition der Spanneinrichtung 20. In der Fixierstellung des Arretierelements 31 ist das Arretierelement 31 mit dem Eingriffselement 33 in Richtung der Längsachse L verschiebefest, insbesondere formschlüssig verbunden. In der Freigabeposition der Spanneinrichtung 20 ist das Arretierelement 31 vom Eingriffselement 33 entkoppelt, das einer Lösestellung des Arretierelements 31 entspricht. Durch das Federelement 35 wird eine Vorspannkraft auf das Arretierelement 31 ausgeübt. Durch die Drehung des Spannhebels 21 wirkt der Nocken 23 mit einer Kulissenbahn 32 derart zusammen, dass das Arretierelement 31 quer zur Längsachse L angehoben bzw. abgesenkt wird.

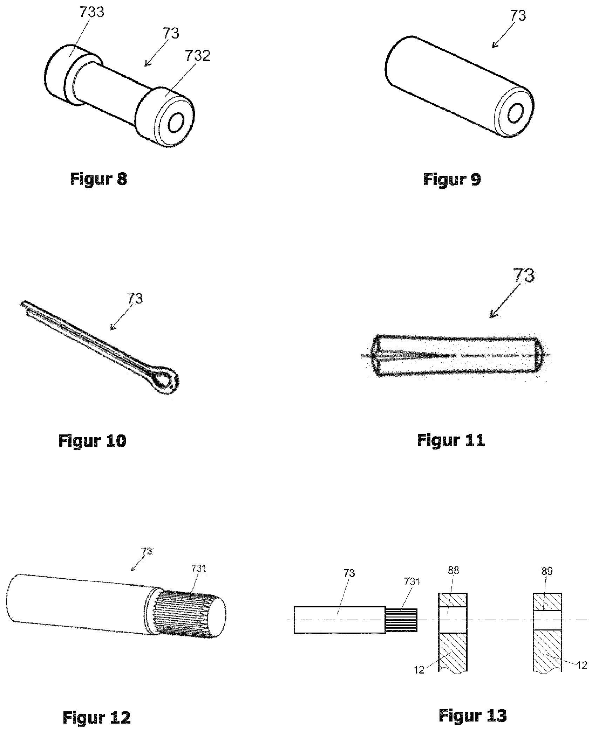

Die Figuren 8-12 zeigen verschiedene Ausführungsbeispiele des Sicherungselements 73 als stiftartige Bauteile. Figur 8 stellt das Sicherungselement 73 als Stift mit zwei Passabschnitten dar. Bevorzugt weist der erste Passabschnitt 732 einen geringen Durchmesser auf als der zweite Passabschnitt 733. Dadurch kann eine Doppelpassung wirksam vermieden werden, so dass eine einfache Montage in den entsprechenden Öffnungen 88, 89 der Seitenwände 90, 91 ermöglicht ist.

In Figur 9 wird das Sicherungselement 73 als Bolzen dargestellt. Dieser Bolzen weist einen über seine Länge konstanten Durchmesser auf.

Ferner ist es möglich, das das Sicherungselement 73 wie in Figur 10 als Splint ausgebildet ist.

In einer weiteren Ausführungsform kann das Sicherungselement 73 wie in Figur 11 als Passkerbstift ausgebildet sein. Dank der Ausbildung des Sicherungselements 73 als Passkerbstift kann eine sichere Fixierung in Richtung der Passkerbstiftachse in den Öffnungen der Seitenwänden 90, 91 der Halteeinheit 12 realisiert werden, so dass auch bei starken Vibrationen ein Herausfallen aus den Öffnungen vermieden werden kann.

In den Figuren 12 und 13 wird das Sicherungselement 73 als Stift mit einer Rändelung 731, insbesondere einer Längsrändelung dargestellt. Dabei zeigt Figur 13 das Sicherungselement 73 vor dem Einpressvorgang in die Halteeinheit 12. Die Durchmesser der beiden Öffnungen 88 und 89 sind dabei dem Durchmesser des Sicherungselements 73 angepasst um Doppelpassungen zu vermeiden, wobei die Öffnung 89 einen kleinen Durchmesser vorweist.

Die Öffnungen 89, in die das Sicherungselement 73 zuletzt gefügt wird, weist bevorzugt einen kleineren Durchmesser auf als die Öffnung 88, in die das Sicherungselement 73 zuerst eingeführt wird.

Generell kann ein Sicherungselement 73 in sämtlichen Ausführungsvarianten dadurch verbessert werden, dass das Ende des Sicherungselements 73 welches zuerst in die Öffnungen der Halteeinheit 12 eingeführt wird, eine Einführfase aufweist. Dadurch kann beim Fügen ein Verkanten des Sicherungselements 73 wirksam vermieden wird.

## Patentansprüche

1. Lenksäule (10) für ein Kraftfahrzeug umfassend
- eine Stelleinheit (11), in der eine Lenkwelle (52) drehbar gelagert ist,
- eine Halteeinheit (12), die mit der Karosserie des Kraftfahrzeugs verbindbar ist und die Stelleinheit (11) trägt, wobei die Stelleinheit (11) relativ zur Halteeinheit (12) verstellbar ist,
- wenigstens ein Arretierelement (31), das mit der Halteeinheit (12) zur axialen Arretierung der Stelleinheit (11) beweglich gekoppelt ist,
- wenigstens ein Federelement (35), das eine Vorspannkraft auf das Arretierelement (31) ausübt,
- wenigstens ein Sicherungselement (73) zur Fixierung des Federele**ments (35),**
**dadurch gekennzeichnet, *dass***
das Arretierelement (31), das Sicherungselement (73) und ein Gegenlager (85) eine Dreipunktanordnung bilden, in der das Federelement (35) fixiert ist, wobei das Federelement (35) einerseits am Arretierelement (31) und andererseits am Gegenlager (85) abgestützt ist, wobei das Sicherungselement (73) zwischen dem Arretierelement (31) und dem Gegenlager (85) angeordnet ist und das Federelement (35) vorspannt.

2. Lenksäule nach Anspruch 1,
**dadurch gekennzeichnet, dass**
wenigstens eine Spannwelle (22) drehfest mit einem Nocken (23) verbunden ist, der das Arretierelement (31) zum Lösen oder Arretieren der Stelleinheit (11) betätigt.

3. Lenksäule nach einem der vorhergehenden Ansprüche,
**dadurch gekennzeichnet, dass**
das Sicherungselement (73) als stiftartiges Bauteil ausgebildet ist, das mit der Halteeinheit (12) fest verbunden ist.

4. Lenksäule nach einem der vorhergehenden Ansprüche,
**dadurch gekennzeichnet, dass**
das Sicherungselement (73) unter einem Winkel, insbesondere orthogonal zur Längsachse des Federelements (35) angeordnet ist.

5. Lenksäule nach einem der vorhergehenden Ansprüche,
**dadurch gekennzeichnet, dass**
die Halteeinheit (12) eine erste Öffnung (88) und eine zweite Öffnung (89) aufweist, wobei die Durchmesser der beiden Öffnungen (88, 89) entsprechend an den Durchmesser des Sicherungselements (73) angepasst sind, wobei eine der beiden Öffnungen (88, 89) einen kleineren Durchmesser aufweist.

6. Lenksäule nach Anspruch 5,
**dadurch gekennzeichnet, dass**
das Sicherungselement (73) in wenigstens eine der beiden Öffnungen (88, 89) der Halteeinheit (12) eingepresst ist.

7. Lenksäule nach Anspruch 1,
**dadurch gekennzeichnet, dass**
das Federelement (35) einen Vorsprung aufweist, der in eine Aussparung der Halteeinheit (12) eingreift.

8. Lenksäule nach Anspruch 1,
**dadurch gekennzeichnet, dass**
das Gegenlager (85) ein Positionierelement (87) aufweist, das in eine korrespondierende Struktur des Federelements (35) eingreift, um die Position des Federelements (35) festzulegen.

9. Lenksäule nach einen der vorrangehenden Ansprüchen,
**dadurch gekennzeichnet, dass** das Sicherungselement (73) eine Rändelung aufweist.

10. Verfahren zum Montieren eines Federelements (35) in eine Lenksäule nach Anspruch 1, bei dem
- das Federelement (35) innerhalb der Dreipunktanordnung positioniert und mit einer Montagekraft vorgespannt wird;
- das Sicherungselement (73) anschließend fest mit der Halteeinheit (12) verbunden wird, um das Federelement (35) im vorgespannten Zustand zu fixieren.

## Claims

1. A steering column (10) for a motor vehicle comprising
- an actuating unit (11), in which a steering shaft (52) is mounted rotatably,
- a holding unit (12) which can be connected to the body of the motor vehicle and supports the actuating unit (11), it being possible for the actuating unit (11) to be adjusted relative to the holding unit (12),
- at least one locking element (31) which is coupled movably to the holding unit (12) for axial locking of the actuating unit (11),
- at least one spring element (35) which exerts a prestressing force on the locking element (31),
- at least one securing element (73) for fixing of the spring element (35),
**characterized in that**
the locking element (31), the securing element (73) and a counterbearing (85) form a three-point arrangement, in which the spring element (35) is fixed, the spring element (35) being supported on one side on the locking element (31) and on the other side on the counterbearing (85), the securing element (73) being arranged between the locking element (31) and the counterbearing (85) and prestressing the spring element (35).

2. The steering column as claimed in claim 1,
**characterized in that**
at least one clamping shaft (22) is connected fixedly to a cam (23) so as to rotate with it, which cam (23) actuates the locking element (31) in order to release or lock the actuating unit (11).

3. The steering column as claimed in either of the preceding claims,
**characterized in that**
the securing element (73) is configured as a pin-like component which is connected fixedly to the holding unit (12).

4. The steering column as claimed in one of the preceding claims,
**characterized in that**
the securing element (73) is arranged at an angle, in particular orthogonally, with respect to the longitudinal axis of the spring element (35).

5. The steering column as claimed in one of the preceding claims,
**characterized in that**
the holding unit (12) has a first opening (88) and a second opening (89), the diameters of the two openings (88, 89) being adapted so as to correspond to the diameter of the securing element (73), one of the two openings (88, 89) having a smaller diameter.

6. The steering column as claimed in claim 5,
**characterized in that**
the securing element (73) is pressed into at least one of the two openings (88, 89) of the holding unit (12).

7. The steering column as claimed in claim 1,
**characterized in that**
the spring element (35) has a projection which engages into a cutout of the holding unit (12).

8. The steering column as claimed in claim 1,
**characterized in that**
the counterbearing (85) has a positioning element (87) which engages into a corresponding structure of the spring element (35), in order to fix the position of the spring element (35).

9. The steering column as claimed in one of the preceding claims,
**characterized in that** the securing element (73) has a knurled portion.

10. A method for mounting a spring element (35) into a steering column as claimed in claim 1, in the case of which method
- the spring element (35) is positioned within the three-point arrangement and is prestressed with a mounting force;
- the securing element (73) is subsequently connected fixedly to the holding unit (12), in order to fix the spring element (35) in the prestressed state.

## Revendications

1. Colonne de direction (10) pour un véhicule automobile comprenant
- une unité de réglage (11) dans laquelle un arbre de direction (52) est logé de manière rotative,
- une unité de maintien (12) qui peut être reliée à la carrosserie du véhicule automobile et qui porte l'unité de réglage (11), l'unité de réglage (11) étant réglable par rapport à l'unité de maintien (12),
- au moins un élément d'arrêt (31), qui est couplé de manière mobile à l'unité de maintien (12) pour l'arrêt axial de l'unité de réglage (11),
- au moins un élément de ressort (35) qui exerce une force de précontrainte sur l'élément d'arrêt (31),
- au moins un élément de sécurité (73) pour fixer l'élément de ressort (35),
c'est pourquoi il a été reconnu que
l'élément d'arrêt (31), l'élément de sécurité (73) et un contre-appui (85) forment un agencement en trois points dans lequel l'élément de ressort (35) est fixé, l'élément de ressort (35) s'appuyant d'une part sur l'élément d'arrêt (31) et d'autre part sur le contre-appui (85), l'élément de sécurité (73) étant disposé entre l'élément d'arrêt (31) et le contre-appui (85) et précontraignant l'élément de ressort (35).

2. Colonne de direction selon la revendication 1,
c'est pourquoi il a été reconnu que
au moins un arbre de serrage (22) est relié solidairement en rotation à une came (23) qui actionne l'élément de blocage (31) pour libérer ou bloquer l'unité de réglage (11).

3. Colonne de direction selon l'une quelconque des revendications précédentes, c'est pourquoi il a été reconnu que
l'élément de sécurité (73) est réalisé sous la forme d'un composant en forme de broche, qui est relié de manière fixe à l'unité de retenue (12).

4. Colonne de direction selon l'une quelconque des revendications précédentes, c'est pourquoi il a été décidé que
l'élément de sécurité (73) est disposé sous un angle, en particulier orthogonal à l'axe longitudinal de l'élément de ressort (35).

5. Colonne de direction selon l'une quelconque des revendications précédentes, c'est pourquoi il a été décidé que
l'unité de retenue (12) présente une première ouverture (88) et une deuxième ouverture (89), les diamètres des deux ouvertures (88, 89) étant adaptés en conséquence au diamètre de l'élément de sécurité (73), l'une des deux ouvertures (88, 89) présentant un diamètre plus petit.

6. Colonne de direction selon la revendication 5,
c'est pourquoi il a été décidé que
l'élément de sécurité (73) est pressé dans au moins l'une des deux ouvertures (88, 89) de l'unité de maintien (12).

7. Colonne de direction selon la revendication 1,
c'est pourquoi il a été décidé que
l'élément de ressort (35) présente une saillie qui s'engage dans un évidement de l'unité de maintien (12).

8. Colonne de direction selon la revendication 1,
c'est pourquoi il a été décidé que
le contre-appui (85) comprend un élément de positionnement (87) qui s'engage dans une structure correspondante de l'élément de ressort (35) afin de fixer la position de l'élément de ressort (35).

9. Colonne de direction selon l'une des revendications précédentes, en ce que l'élément de sécurité (73) présente un moletage.

10. Procédé de montage d'un élément de ressort (35) dans une colonne de direction selon la revendication 1, dans lequel
- l'élément de ressort (35) est positionné à l'intérieur de l'agencement à trois points et est précontraint avec une force de montage ;
- l'élément de sécurité (73) est ensuite fermement relié à l'unité de maintien (12) afin de fixer l'élément de ressort (35) dans l'état précontraint.
